# EUROPEAN PATENT SPECIFICATION

(11) **EP 2 734 699 B1**
(45) Date of publication and mention of the grant of the patent: **14.10.2015**
(21) Application number: 12731706.3
(22) Date of filing: 25.05.2012
(51) Int. Cl.: E21B 4/04, E21B 19/08, E21B 44/06

(54) **MOVEMENT CONTROL SYSTEM FOR A DRILLING PLANT**
BEWEGUNGSSTEUERUNGSSYSTEM FÜR EINE BOHRANLAGE
SYSTÈME DE COMMANDE DE DÉPLACEMENT POUR INSTALLATION DE FORAGE

(30) Priority: 26.05.2011 IT VI20110135
(43) Date of publication of application: 28.05.2014
(73) Proprietor: Reel S.r.l., 36024 Ponte di Nanto (VI) (IT); Fade Engineering S.A.S., 25046 Bornato di Cazzago San Martino (BS) (IT)
(72) Inventor: BERTOTTO, Ezio, I-36050 Bolzano Vicentino (VI) (IT); INVERARDI, Ennio, I-25050 Passirano (BS) (IT)
(74) Representative: Maroscia, Antonio
(86) International application number: PCT/IB2012/052640
(87) International publication number: WO 2012/160544

(56) References cited:
- DE-A1- 4 410 404
- US-A- 5 390 747
- US-A- 5 771 981
- US-A1- 2008 203 734
- US-A1- 2008 217 024

## Description

### Field of the invention

The present invention is generally finds application in the field of plants for perforating and/or drilling subsoil and particularly relates a drilling plant movement control system.

### Background art

As is known, plants for drilling subsoil comprise a support tower configured to support a drilling head adapted to obtain the controlled perforation of the ground during raising and lowering movements thereof. US-A-5 390 747 discloses the features found in the preamble to claim 1.

Particularly, may be provided actuating means of the hydraulic type adapted to drive the head by regulating both its lowered and raised speed.

For such purpose, the drilling head can be connected to one or more rods of a hydraulic piston in such a manner that for each predetermined movement of the road corresponding a vertical translation of the drilling head.

Between the drilling head and the road, a cable lifting device is often interposed which is adapted to increase the traction strength produced by the road and acting on the head.

The movement of the road is obtained through the action of a fluid contained in a hydraulic circuit fed by a pump put in rotation by an electric motor.

Furthermore, during drilling it is necessary to maintain substantially constant the lowered speed of the drilling head.

Such effect is obtained by maintaining a substantially constant pressure differential between the two ends of the road, in such a manner to compensate the lowering strength of the drilling head due to the action of its weight.

In order to generate the differential of the pressure is necessary that the fluid present in the hydraulic circuit applies a braking action on the road in response with the weight strength applied to the road end connected to the drilling head.

Furthermore, the hydraulic circuit comprises cooling means for the fluid formed by one or more heat exchangers adapted to cool the fluid drawing part of the heat absorbed thereof during the braking step of the drilling head.

Nevertheless, the regulation of the fluid pressure in the hydraulic circuit, and thus the corresponding control of the variation of the drilling head lowered speed, is normally manually achieved by an operator who visually checks the operation of the head during drilling.

A first drawback of such solution is that the movement systems require a high amount of power energy during their opening.

Indeed, to keep the response times of the system particularly low it need to constantly maintain the hydraulic circuit under pressure.

Such requirement makes it necessary a continuous operating of the electric motor in order to not interrupt the rotation of the pump even when the drilling head is not carrying out any operation.

Furthermore, the high amount of heat absorbed by the fluid during drilling requires large-volume size tanks and the use of heat exchangers of particularly large size that absorb a substantially portion of the energy used by the plant during operating.

A further drawback of such solution is that the overall inertia of the system does not allow a particularly accurate regulation of the drilling speed, and significantly reduces the sensitivity of the drilling head.

Furthermore, the obtainment of the hydraulic circuit results to be particularly complex and requires particularly long installation times well as periodic, costly subsequent maintenance operations.

Moreover, the constant presence of an operator is constantly required during the drilling step for controlling and adjusting the drilling speed of the head in function of the instantaneous depth reached thereof, with a consequent increase of the operating costs of the plant.

### Presentation of the invention

The object of the present invention is to overcome the above drawbacks, by providing a movement control system for a drilling plant that is particularly efficient and relatively cost-effective.

A particular object of the present invention is to provide a system which allows at least partially recovering the power energy during the operation of the plant, allowing the limitation of the whole power energy consumption.

A further object of the present invention is to provide a control system that uses heat exchanging means with relatively limited size for reducing the energy absorptions.

A further object of the present invention is to provide a control system that allows adjusting the drilling speed in a particularly accurate manner, and at the same time allows operating on the drilling head with high precision.

A particular object of the present invention is to provide a control system which allows easy installation and which provides for reduced maintenance operations during the functioning thereof.

Not least object of the present invention is to provide a control system that allows automatically regulating the drilling speed in function of the depth without requiring the constant visual control by an operator.

Such objects, as better explained hereafter, are fulfilled by a drilling plant movement control system, as defined in claim 1, comprising at least one first hydraulic circuit to drive the actuating means with an inlet conduit and an outlet conduit for a working fluid, at least one pumping device adapted to promote the circulation of the fluid from said inlet conduit to said outlet conduit, at least a first electric machine mechanically coupled to said at least one pumping device to promote the fluid flow in said at least one first hydraulic circuit, wherein said electric machine is connected to an electric circuit connectable to the net.

The system is characterized in that said at least one pumping device is of reversible type, said at least one electric machine being adapted to operate selectively as an electric motor to promote the circulation of the fluid in a first sense to drive the actuating means during the rise of the drilling head, and as electric generator upon fluid flow in a second sense opposite to the first promoted by the actuating means during the lowering of the drilling head to inject in the net the power energy produced by said machine.

Thanks to this particular embodiment of the invention, the control system will allow recovering at least part of the energy of the whole drilling plant and increasing the whole efficiency of the system, optimizing the overall energy balance of the plant.

Advantageous embodiments of the invention are obtained in accordance with the dependent claims.

### Brief description of the drawings

Further features and advantages of the invention will be more apparent from the detailed of a preferred, non-exclusive embodiment of a drilling plant movement control system, which is described as a non-limiting example with the help of the annex drawing, in which:
**FIG. 1** is a schematic block view of a movement control system for a drilling plant in a first configuration;
**FIG. 2** is a schematic block view of a movement control system in a second configuration.

### Detailed description of a preferred embodiment

Referring to the above figures, drilling plant movement control system, generally designated by **1,** may be associated with a drilling plant **T,** only partially illustrated in the figures, comprising a support tower **S** adapted to contain one or more drilling heads **H.**

The plant **T** may be comprise one or more drilling heads **H** insertable inside the support tower **S** and connectable to actuating means **A** of hydraulic type.

The actuating means **A** may be preferably configured to promote the translation of the drilling head **H** in a direction substantially parallel to a vertical axis **V,** or slightly slanted.

Furthermore, the actuating means **A** may regulate both the raising translation of the drilling head **H** during the perforation of the subsoil **G,** and the lowering translation, for bringing the head **H** back to the surface.

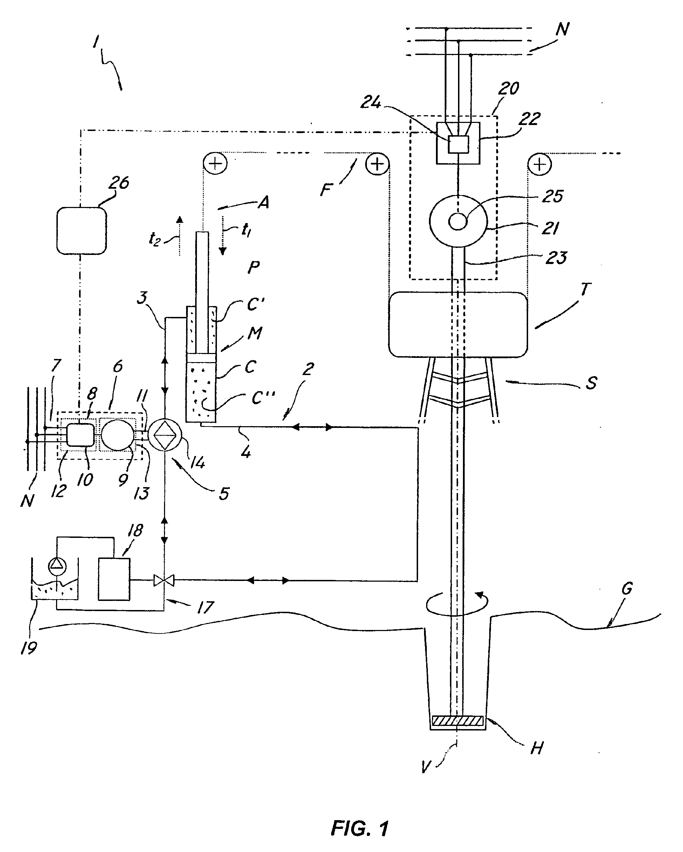

As illustrated in **Fig. 1****,** the movement control system **1** may comprise a first hydraulic circuit **2** to drive the actuating means **A.**

The first circuit **2** comprises an inlet conduct **3** and an outlet conduct **4** for a working fluid and a pumping device **5** adapted to promote the circulation of the fluid from the inlet conduct **3** to the outlet conduct **4.**

Also, the system **1** comprises at least a first electric machine **6** mechanically coupled to the pumping device **5** to promote the fluid flow into the first hydraulic circuit **2.**

In addition, the first electric machine **6** is connected to an electric circuit **7** connectable to an electrical net **N** or to an electric accumulator, not shown.

According to a first peculiar feature of the invention, the pumping device 5 is of reversible type.

The first electric machine **6** is adapted to selectively operate as electric motor, to promote the circulation of the fluid in a first sense and to drive the actuating means **A** during the rise of the drilling head **H,** and as an electric generator upon fluid flow in a second sense opposite the first, promoted by the actuating means **A** during the lowering of the drilling head **H.**

In a first variant, not shown in the enclosed figures, the first electric machine **6** will be directly connected to the net **N** or to the accumulator, through the electric circuit **7,** to absorb power energy when it operates as motor or inject the energy when it operates as generator.

Moreover, in such case the pumping device **5** may be of self-regulating type in such a manner to vary the rotation speed of the first electric machine **6** when the latter operates as generator.

In a preferred variant, shown in the enclosed figures, electronic control means **8** may however to be provided which are associated to the electric circuit **7** for controlling the first electric machine **6.**

Particularly, the control means **8** may control the electric power supply of the first machine **6** when the same operates as a motor.

Moreover, the control means **8** may be designed to absorb the power energy produced by the first machine **6** when it operates as generator and to re-inject such energy in the net **N** or in the accumulator, in such a manner to recover part of the energy of the whole drilling plant **T** and increase the whole efficiency of the system **1.**

According to the configuration of the invention illustrated in the figures, the actuating means **A** may comprise one or more hydraulic jacks **M** of double-acting type.

Nevertheless, alternatively the plant **T** may have actuating means **A** comprising motor means of hydraulic type connected to the head **H** by means of winch, cable or similar.

In the illustrated configuration, as known the jack **M** may comprise a cylindrical jacket **C** fixedly anchored to the bearing frame of the plant, not illustrated in the figures, and a piston **P** sealingly slidable inside the jacket **C** and having one end connected to the drilling head **H.**

Furthermore, the actuating means **A** may comprise rope lifting means **F** interposed between the piston **P** and the drilling head **H** and configured to increase the strength acting thereof, transmitted by the piston **P.**

Advantageously, the head of the piston **P** may divide the jacket **C** into a first chamber **C'** and a second chamber **C"** for the collection of the fluid.

The chambers **C', C"** will be fluidly connected, respectively, to the inlet conduct **3** and to the outlet conduct **4** of the first circuit **2** and will be fluidically isolated from the head of the piston **P.**

The circulation of the fluid in the first sense inside the first circuit **2** will fill the first chamber **C'** and will empty the second chamber **C",** producing the sliding of the piston **P** inside the jacket **C** in a first sliding sense **t₁** such to determine the raise of the drilling head **H.**

In turn, the lowering of the head **H** will cause the sliding of the piston **P** inside the jacket **C** in a second sense **t₂** opposite the first **t₁,** in such a manner to promote the circulation of the fluid in the second sense inside the first circuit **2,** emptying the first chamber **C'** and filling the second chamber **C".**

Suitably, the working fluid may be of compressible type or non-compressible type, and the pumping device **5** will be configured to promote the circulation thereof inside the first hydraulic circuit **2** with a variable pressure lower than a maximum predetermined value.

According to a first exemplifying and non-limiting example of the invention, the working fluid may be mineral lubricating oil, synthetic lubricating oil or other type.

The first electric machine **6** may be of rotating type and may have a nominal predetermined electric power such to be put in rotation the pumping device **5** with a maximum rotating torque adapted to bring the fluid inside the first circuit **2** at the maximum pressure.

Furthermore, during the functioning of the first electric machine **6** operating as generator, the electric power re-injected in the net **N** or in the accumulator may correspond substantially to its nominal electric power.

Suitably, as illustrated in **Fig. 1****,** the first electric machine **6** may comprise a first electric motor **9** and the control means **8** may comprise a first inverter **10** electrically connected to the first motor **9.**

The first motor **9** will be preferably housed close to the pumping device **5** and may comprise a first power shaft **11** mechanically associated with to the same for transferring thereto or receiving therefrom a dynamic torque.

Furthermore, the first inverter **10** may be electrically connected to the electric circuit **7** connected to the net **N** or to the accumulator and may be housed close to the first motor **9** inside a casing **12** distinct and separate from the casing **13** of the first motor **9.**

Furthermore, in an alternative configuration not shown in the figures, the first inverter **10** may be housed in an environment distinct and separate with respect to the one into which the pumping device **5** and the first motor **9** are housed in order to facilitate the installation thereof and allow to an operator to access at the same for carrying out maintenance operations.

Suitably, the first inverter **10** may be designed to vary the electric power feeding parameters of the first motor **9** and adapt the electrical magnitudes of the power energy generated thereof with those present in the net **N** or in the accumulator.

The first inverter **10** may comprise an electronic portion, not shown in the figures, adapted to control the operation of the first motor **9** when the same is electrically powered by the net **N** or by the accumulator through the electric circuit **7.**

Nevertheless, the first inverter **10** may further comprise an electronic converter, not shown in the figures, designed to adapt the electrical magnitudes of the energy produced by the first motor **9** when the latter operates as generator.

Suitably, the pumping device **5** may comprise one or more volumetric pumps **14,** which, by way of example, may be of lobe type or gear type, with axial or radial pistons, blades or the like, and possibly be of self-regulating type.

The pump **14** may be connected to the first power drive shaft **11** of the first motor **9** by means of a mechanical connection joint, not shown in the figures, to be easily disconnected from the first circuit **2** if its maintenance or substitution is requested.

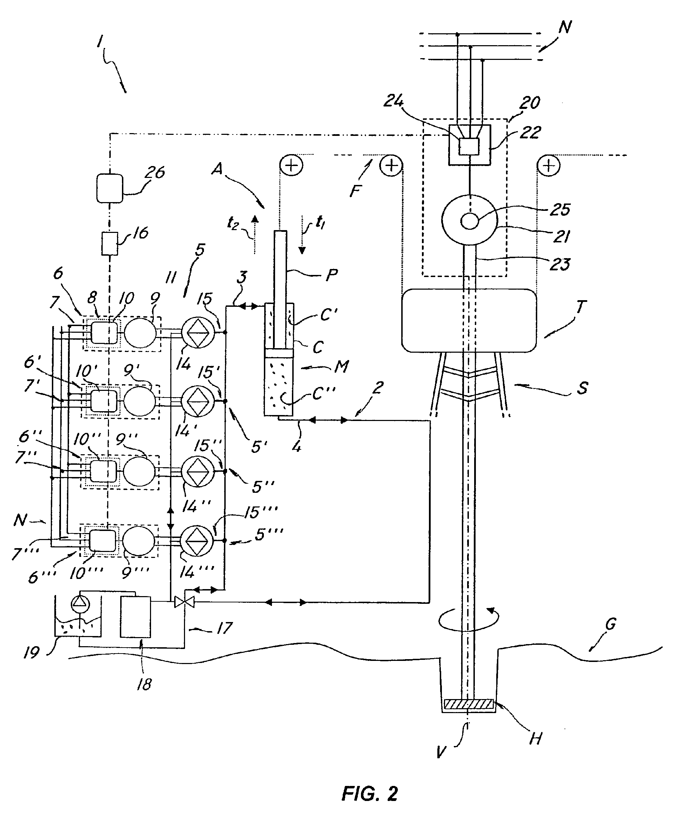

The **Fig. 2** shown a second configuration, preferred but not limiting of the invention, in which it is provided that the system **1** comprises a plurality of hydraulic circuits **15, 15', 15",...** separate from each other and fluidically connected in parallel to the inlet conduct **3** and to the outlet conduct **4.**

Each of such hydraulic circuits **15, 15', 15",...** may be connected to a respective pumping device **5, 5', 5",...** and to a respective first electric machine **6, 6', 6",**....

Furthermore, each pumping device **5** may comprise a respective pump **14, 14', 14",...** and each first electric machine may comprise a respective first motor **9, 9', 9",...** connected to a corresponding first inverter **10, 10'**, **10"**,....

In the shown embodiment, the system **1** will comprise distinct hydraulic circuits **15, 15', 15", 15"'**, each comprising a pump **14, 14', 14", 14'"** of reversible type, a first motor **9, 9', 9", 9'"** and a first inverter **10, 10', 10", 10"',** the latter connected to the net N or to the accumulator through of a respective electric circuit **7, 7', 7", 7"'.**

The pumps **14, 14', 14",...** may have the same size and be configured to have the same maximum flow rate of the fluid.

Furthermore, each pump **14, 14', 14",...** may be connected to a first motor **9, 9', 9",...** and to a first inverter **10, 10', 10",...** having equal size and equal electrical characteristics with respect to each other.

It is understood that such embodiment is merely exemplificative, and the system may comprise a different number of hydraulic circuits **15, 15', 15",...** with two or more pumps **14, 14', 14",...** having different maximum flow rate values and two or more first motors **9, 9', 9",...** and/or first inverters **10, 10', 10",...** having different electrical characteristics with respect to each other.

Suitably, the system **1** may comprise an electronic control unit **16** connected to each of the first inverters **10, 10'**, **10",....**

The electronic control unit **16** will be configured for selectively driving one or more of the first motors **14, 14', 14",...** connected to the first inverters **10**, **10**', **10",...** by controlling the rotation speed thereof.

In this manner, the instantaneous flow rate of the fluid present inside the first circuit **2** may be varied as a function of the fluid amount required by the same and necessary for driving the hydraulic actuating means **A.**

When the plant T will request the maximum drive speed for the actuating means **A,** e.g. during the rise of the drilling head **H,** the electronic control unit **16** will be configured for electrically feeding the first motor **9, 9', 9",...** and the first inverter **10, 10', 10",...** of each circuit **15, 15', 15",...** in such a manner that the same inject in the first circuit **2** the maximum flow rate of the fluid according the first circulation sense.

During the lowered step of the drilling head **H** the electronic control unit may be configured for driving the inverter **10, 10', 10",...** in such a manner to selectively connect or disconnect from the net **N** or from the accumulator one or more of the first motors **9, 9', 9",...** of the hydraulic circuits **15, 15', 15",...** operating as generators and put in rotation by the respective pump **14, 14', 14",....**

In both the shown embodiments, the system **1** may comprise a second hydraulic circuit **17** fluidically connected to the first circuit **2** and comprising heat exchanging means **18** for cooling the working fluid.

The heat exchanging means **18** may comprise one or more heat exchangers, not shown in the figures, and heat recovering means, also not shown, adapted to convey the heat drawn during the heat exchange to heat service liquids, for example water, used in other thermal devices present in the plant **T**.

Furthermore, the second hydraulic circuit **17** may comprise a fluid tank **19** of the fluid for the controlled releasing of a predetermined amount of the same in the first hydraulic circuit **2** during the driving of the actuating means **A,** in such a manner to completely fill the respective hydraulic circuits.

The fluid drawn from the tank **19** may be conveyed through the heat exchanging means **18** before reaching the first circuit **2,** in such a manner that the fluid has a lower temperature than that of the working fluid in the first circuit **2.**

In this manner, during the functioning of the actuating means **A,** the temperature of the fluid inside the first circuit **2** may be substantially controlled through the mixing of flows having different temperatures respect to each other.

Moreover, the controlled releasing of the fluid coming from the tank **19** may also allow to receive the additional amount of fluid necessary for completely filling the jacket **C,** thus balancing the possible volumetric difference existing between the first chamber **C'** and the second chamber **C".**

Suitably, the system **1** may comprise a second electric machine **20** coupleable to the drilling head **H** and adapted to promote the rotation thereof about a substantially vertical axis **V.**

The second electric machine **20** may be housed close to the drilling head **H** and may be joined thereto, to move itself downwardly or upwardly, or may be anchored to the supporting tower **S** in a fixed manner.

Furthermore, the second electric machine **20** will be configured to promote the rotation of the drilling head **H** with a predetermined drive torque and rotation speed.

Advantageously, the second electric machine **20** may comprise a second electric motor **21** and a second inverter **22** adapted to control the rotation speed thereof.

The second motor **21** will comprise a second power drive shaft **23** connected to the drilling head **H** by a connection joint, not shown in the figures. The second inverter **22** may also control the electrical or electromechanical parameters of the second motor **21,** such for example the drive torque associated with the second power drive shaft **23.**

In this manner, the drive torque imparted to the drilling head **H** by the second power drive shaft **23** may always be less than a predetermined value corresponding to the maximum value tolerable by the tool inserted in the drilling head **H.**

Suitably, the second inverter **22** can comprise sensor means **24** adapted to detect an electric or mechanic characteristic associated with the second motor **21,** for to feedback the rotation speed of the head **H** as a function of the detected value of the characteristic.

Preferably, the sensor means **24** may measure the instantaneous torque supplied by the second motor **21** and associated with the drilling head **H** and to feedback the rotation speed thereof as a function of the measured value of the driving torque.

Advantageously, the sensor means **24** may comprise an electronic portion **25** associated to the second motor **21** and configured to detect the driving torque supplied thereof by means of the instantaneous detection of several electrical feeding parameters associated therewith.

In this manner, it will be possible to adjust the rotation speed of the second motor **21** without resorting to the use of sensor means **24** placed outside the second inverter **22** or directly connected to the second power drive shaft **23** of the second motor **21.**

Furthermore, the system **1** may comprise a central unit **26** connected to the first inverter **10,** or to the electronic control unit **16,** and to the second inverter **22** to vary the driving of the actuating means **A** as a function of the value of the detected instantaneous driving torque.

The central unit **26** may be housed close to the plant **T** in an area accessible to the user and may comprise interfacing and displaying means, not shown in the figures, adapted to allow the operator to detect and set the operating parameters of the first electric machine **6** and of the second electric machine **20.**

According to a further embodiment of the invention, the central unit **26** may comprise a processor, not shown in the figures, and it may also be of remote type.

The central unit **26** may be designed to control the first electric machine **6** in a manner so as to synchronize the driving of the actuating means **A** as a function of the instantaneous driving torque detected on the second motor **21** during the lowering of the drilling head **H.**

The central unit **26** may control the second electric machine **20** in a such a manner to maintain substantially constant the rotation speed of the drilling head **H.** Furthermore, the central unit **26** may control the first electric machine **6** or the electronic control unit **16** only as a function of the value of drive torque detected in the second motor **21.**

In this manner, the actuation of the actuating means **A** and the consequent lowering speed of the drilling head **H** may be controlled as a function of the braking torque produced by the subsoil **G** on the tool during drilling.

Suitably, the first **9** and the second **21** electric motor may have a known structural type, such as, for example, that used in synchronous or asynchronous motors.

According to a particularly advantageous aspect, the first **9** and the second 21 electric motor may be of synchronous reluctance type in a manner so as to increase, respectively, the efficiency of the first electric machine **6** and the second electric machine **20** maintaining the size of the both relatively limited.

Furthermore, the first electric machine **6** and the second electric machine **20** may comprise respective cooling circuits, not shown in the figures, containing a cooling liquid and configured to draw the heat generated by the first **9** and second **21** motors and/or by the first **10** and by the second **22** inverters during the functioning thereof.

The above description clearly shows that the invention fulfills the intended object and particularly meets the requirement of providing a system for the movement control of drilling plants that allows the at least partial recovery of the energy, in order to reinsert the same in the network.

The system of the invention is susceptible of a number of changes and variants, within the inventive concept expressed in the appended claims. All the details thereof may be replaced by other technically equivalent parts, and the materials may vary depending on different needs, without departure from the scope of the finding.

While the system has been described with particular reference to the accompanying figures, the numerals are only used for the sake of a better intelligibility of the invention and shall not be intended to limit the claimed scope in any manner.

## Claims

1. A drilling plant **(T)** movement control system, wherein the plant **(T)** comprises a drilling head **(H)** raised and lowered by hydraulic actuating means **(A),** wherein the system comprises:
- at least a first hydraulic circuit **(2)** to drive the actuating means **(A)** with an inlet conduit **(3)** and an outlet conduit **(4)** for a working fluid;
- at least one pumping device **(5)** adapted to promote the circulation of the fluid from said inlet conduit **(3)** to said outlet conduit **(4);**
- at least one first electric machine **(6)** mechanically coupled to said at least one pumping device **(5)** to promote the fluid flow in said at least one first hydraulic circuit **(2),** wherein said first electric machine **(6)** is connected to an electric circuit **(7)** connectable to the net **(N)** or an electric accumulator; wherein said at least one pumping device **(5)** is of a reversible type, said at least one first electric machine **(6)** being adapted to operate selectively as electric motor to promote the circulation of the fluid in a first sense and to drive the actuating means **(A)** during the rise of the drilling head **(H), characterized in that** the electric machine is adapted to operate as electric generator upon fluid flow in a second sense opposite the first promoted by the actuating means **(A)** during the lowering of the drilling head **(H)** to inject in the net **(N)** or in the accumulator the electric power generated from said first machine **(6)** to recover part of the energy of the whole drilling plant **(T)** and increase the whole efficiency of the system.

2. System according to claim 1, **characterized by** comprising electronic control means **(8)** associated to said electric circuit **(7)** for controlling the electric feeding of said first machine **(6)** when it works as motor, respectively for absorbing the power energy produced by said first machine **(6)** when it works as generator.

3. System according to claim 2, **characterized in that** said first electric machine **(6)** comprises a first electric motor **(9)** and said control means **(8)** comprise at least one first inverter **(10)** electrically connected to said first motor **(9).**

4. System according to claim 3, **characterized in that** said first inverter **(10)** is designed to vary the electric feeding parameters of said first motor **(9)** and to adjust the electric magnitude of the power energy generated thereof with those of the net **(N)** or of the accumulator.

5. System according to any preceding claim from 2 to 4, **characterized by** comprising a plurality of hydraulic circuits **(15, 15', 15",...)** distinct with each other and fluidically connected in parallel to said inlet conduit **(3)** and said outlet conduit **(4),** each of said hydraulic circuits **(15, 15', 15",...)** being connected to a respective pumping device **(5, 5', 5",...)** and to respective first electric machines **(6, 6'**, **6",...)** connected to respective electronic control means **(8).**

6. System as claimed to claim 5, **characterized in that** said electronic control means **(8)** comprise respective first inverter **(10, 10', 10",...),** an electronic control unit **(16)** being provided which is connected to each of said first inverter **(10, 10', 10",...)** and designed to selectively drive one or more of said first electric machines **(6, 6', 6",...)** controlling the rotation speed thereof.

7. System as claimed in any preceding claim, **characterized by** comprising, at least one second hydraulic circuit **(17)** fluidically connected to said first circuit **(2)** and comprising heat exchanging means **(18)** for cooling the working fluid.

8. System as claimed in claim 7, **characterized in that** said second hydraulic circuit **(17)** comprises a fluid tank **(19)** for the controlled releasing of a predetermined amount of the same fluid in said first hydraulic circuit **(2)** during the driving of the actuating means **(A)** to completely fill the respective hydraulic circuits.

9. System as claimed in any preceding claim, **characterized by** comprising a second electric machine **(20)** coupleable to the drilling head **(H)** and adapted to promote the rotation thereof about a substantially vertical axis **(V).**

10. System as claimed to claim 9, **characterized in that** said second electric machine **(20)** comprises a second electric motor **(21)** and a second inverter **(22)** adapted to control the rotation speed of said second motor **(21).**

11. System as claimed to claim 10, **characterized in that** said second inverter **(22)** comprises sensor means **(24)** designed to detect an electric or mechanic characteristic of said second motor **(21)** and to feedback the rotation speed thereof in function of the detected value of said characteristic.

12. System as claimed to claim 11, **characterized by** comprising a central unit **(26)** connected to one or more of said first inverters **(10)** and to said second inverter **(22)** to adjust the driving of the actuating means **(A)** as a function of the detected value of said characteristic.

## Patentansprüche

1. Ein Bewegungssteuerungssystem für eine Bohranlage (T), wobei die Anlage (T) einen Bohrkopf (H) umfasst, der gehoben und gesenkt wird von hydraulischen Betätigungseinrichtungen (A), wobei das System umfasst:
- mindestens einen ersten hydraulischen Schaltkreis (2) zum Antrieb der Betätigungseinrichtungen (A) mit einer Zufuhrleitung (3) und einer Auslassleitung (4) für ein Betriebsfluid,
- mindestens eine Pumpvorrichtung (5), die ausgelegt ist den Fluss des Fluids von der Zufuhrleitung (3) zu der Auslassleitung (4) zu bewirken,
- mindestens eine erste elektrische Maschine (6), die mechanisch gekoppelt ist mit der mindestens einen Pumpvorrichtung (5), um den Fluss des Fluids in dem mindestens einen ersten hydraulischen Schaltkreis (2) zu bewirken, wobei die erste elektrische Maschine (6) verbunden ist mit einem elektrischen Schaltkreis (7), der verbunden werden kann mit dem Netz (N) oder einem elektrischen Akkumulator, wobei diese mindestens eine Pumpvorrichtung (5) umkehrbar ist und die mindestens eine erste elektrische Maschine (6) ausgelegt ist, wahlweise als elektrischer Motor zu wirken, um den Fluss des Fluids in eine erste Richtung zu bewirken und die Betätigungseinrichtungen (A) während des Hebens des Drillkopfs (H) anzutreiben, **dadurch gekennzeichnet, dass** die elektrische Maschine ausgelegt ist, als elektrischer Generator zu wirken in Folge des Flusses des Fluids in eine zweite Richtung entgegen der Ersten bewirkt durch die Betätigungseinrichtungen (A) während des Absenkens des Drillkopfs (H), um in das Netz (N) oder in den Akkumulator die elektrische Leistung einzuspeisen, die von der ersten Maschine (6) erzeugt wurde, um einen Teil der Energie der ganzen Bohranlage (T) zurück zu gewinnen und die gesamte Effizienz des Systems zu erhöhen.

2. System gemäß Anspruch 1, **dadurch gekennzeichnet, dass** elektronische Steuereinrichtungen (8) vorgesehen sind, die mit dem elektrischen Schaltkreis (7) verbunden sind zum Steuern der elektrischen Zufuhr dieser ersten Maschine (6), wenn diese als Motor arbeitet, beziehungsweise zur Aufnahme der Leistung, die von dieser ersten Maschine (6) erzeugt wird, wenn diese als Generator arbeitet.

3. System gemäß Anspruch 2, **dadurch gekennzeichnet, dass** die erste elektrische Maschine (6) einen ersten elektrischen Motor (9) umfasst und die Steuereinrichtungen (8) mindestens einen ersten Inverter (10) umfassen, der elektrisch verbunden ist mit dem ersten Motor (9).

4. System gemäß Anspruch 3, **dadurch gekennzeichnet, dass** der erste Inverter (10) ausgelegt ist, die elektrischen Zufuhrparameter des ersten Motors (9) zu variieren und die elektrische Größe der davon erzeugten Leistung anzupassen an jene des Netzes (N) oder des Akkumulators.

5. System gemäß einem der vorhergehenden Ansprüche 2 bis 4, **dadurch gekennzeichnet, dass** eine Vielzahl von hydraulischen Schaltkreisen (15, 15', 15" ...) vorgesehen sind, die getrennt sind von einander und fluidisch parallel mit der Zufuhrleitung (3) und mit der Auslassleitung (4) verbunden sind, wobei jeder der hydraulischen Schaltkreise (15, 15', 15" ...) verbunden ist mit einer jeweiligen Pumpvorrichtung (5, 5', 5", ...) und mit jeweils ersten elektrischen Maschinen (6, 6', 6", ... ), die verbunden sind mit jeweils elektronischen Steuereinrichtungen (8).

6. System gemäß Anspruch 5, **dadurch gekennzeichnet, dass** die elektronischen Steuereinrichtungen (8) jeweils erste Inverter (10, 10', 10"...) umfassen, wobei eine elektronische Steuer-einheit (16) vorgesehen ist, die verbunden ist mit jeder der ersten Inverter (10, 10', 10", ...) und ausgelegt ist wahlweise eine oder mehrere der ersten elektrischen Maschinen (6, 6', 6"', ,.) anzutreiben und deren Drehgeschwindigkeit zu steuern.

7. System gemäß einem der vorhergehenden Ansprüche, **dadurch gekennzeichnet, dass** mindestens ein zweiter hydraulischer Schaltkreis (17) vorgesehen, der fluidisch verbunden ist mit dem ersten Schaltkreis (2) und Warmetauschereinrichtungen (18) vorgesehen sind zum Kühlen des Betriebsfluids.

8. System gemäß Anspruch 7, **dadurch gekennzeichnet, dass** der zweite hydraulische Schaltkreis (17) einen Fluidtank (19) umfasst für das gesteuerte Ablassen einer vorbestimmten Menge des selben Fluids in den ersten hydraulischen Schaltkreis (2) während des Antriebs der Betätigungseinrichtungen (A), um die jeweiligen hydraulischen Schaltkreise vollständig zu füllen.

9. System gemäß einem der vorhergehenden Ansprüche, **dadurch gekennzeichnet, dass** eine zweite elektrische Maschine (20) vorgesehen ist, die verbunden werden kann mit dem Bohrkopf (H) und ausgelegt ist dessen Drehung um eine im Wesentlichen vertikale Achse (V) zu bewirken.

10. System gemäß Anspruch 9, **dadurch gekennzeichnet, dass** die zweite elektrische Maschine (20) einen zweiten elektrischen Motor (21) umfasst und einen zweiten Inverter (22), die ausgelegt sind die Drehgeschwindigkeit des zweiten Motors (21) zu steuern.

11. System gemäß Anspruch 10, **dadurch gekennzeichnet, dass** der zweite Inverter (22) Messeinrichtungen (24) aufweist, die ausgelegt sind eine elektrische oder mechanische Eigenschaft des zweiten Motors (21) zu erfassen und dessen Drehgeschwindigkeit in Abhängigkeit von dem erfassen Wert dieser Eigenschaft zurück zu melden.

12. System gemäß Anspruch 11, **dadurch gekennzeichnet, dass** eine Zentraleinheit (26) vorgesehen ist, die mit einem oder mehreren der ersten Inverter (10) und mit dem zweiten Inverter (22) verbunden ist, um den Antrieb der Betätigungseinrichtung (A) in Abhängigkeit von dem erfassten Wert dieser Eigenschaft einzustellen.

## Revendications

1. Système de commande de déplacement pour installation de forage (T), dans lequel l'installation (T) comprend une tête de forage (H) levée et baissée par des moyens d'actionnement hydrauliques (A), dans lequel le système comprend :
- au moins un premier circuit hydraulique (2) pour actionner les moyens d'actionnement (A), comportant une conduite d'entrée (3) et une conduite de sortie (4) destinées à un fluide de travail ;
- au moins un dispositif de pompage (5), conçu pour activer la circulation du fluide, de ladite conduite d'entrée (3) vers ladite conduite de sortie (4) ;
- au moins une première machine électrique (6) couplée mécaniquement audit au moins un dispositif de pompage (5) pour activer la circulation du fluide dans ledit au moins un premier circuit hydraulique (2), dans lequel ladite première machine électrique (6) est connectée à un circuit électrique (7) pouvant être branché sur le réseau (N) ou sur un accumulateur électrique ;
dans lequel ledit au moins un dispositif de pompage (5) est du type réversible, ladite au moins une première machine électrique (6) étant conçue pour fonctionner sélectivement comme moteur électrique, pour activer la circulation du fluide dans un premier sens et entraîner les moyens d'actionnement (A) pendant la montée de la tête de forage (H), **caractérisé en ce que** la machine électrique est conçue pour fonctionner comme génératrice électrique quand le fluide s'écoule dans un deuxième sens, opposé au premier sens, activé par les moyens d'actionnement (A), pendant l'abaissement de la tête de forage (H), pour injecter dans le réseau (N) ou dans l'accumulateur l'énergie électrique produite par la première machine (6), de manière à récupérer une partie de l'énergie de l'installation de forage (T) entière, et augmenter l'efficacité globale du système.

2. Système selon la revendication 1, **caractérisé en ce qu'**il comprend des moyens électroniques de commande (8) associés audit circuit électrique (7) pour commander l'alimentation électrique de ladite première machine (6) lorsqu'elle fonctionne comme moteur, et pour absorber l'énergie électrique produite par ladite première machine (6) lorsqu'elle fonctionne comme génératrice.

3. Système selon la revendication 2, **caractérisé en ce que** ladite première machine électrique (6) comprend un premier moteur électrique (9) et lesdits moyens de commande (8) comprennent au moins un premier onduleur (10) connecté électriquement audit premier moteur (9).

4. Système selon la revendication 3, **caractérisé en ce que** ledit premier onduleur (10) est destiné à varier les paramètres d'alimentation électrique dudit premier moteur électrique (9) et à régler la grandeur électrique de la puissance d'énergie électrique produite par celui-ci sur les valeurs du réseau (N) ou de l'accumulateur.

5. Système selon n'importe laquelle des revendications précédentes 2 à 4, **caractérisé en ce qu'**il comprend une pluralité de circuits hydrauliques (15, 15', 15", ...) distincts l'un de l'autre, et reliés fluidiquement en parallèle à ladite conduite d'entrée (3) et à ladite conduite de sortie (4), chacun desdits circuits hydrauliques (15, 15', 15", ...) étant reliés à un dispositif de pompage (5, 5', 5", ...) respectif, et à des premières machines électriques respectives (6, 6', 6",...) connectés à des moyens électroniques de commande respectifs (8).

6. Système selon la revendication 5, **caractérisé en ce que** lesdits moyens électroniques de commande (8) comprennent un premier onduleur respectif (10, 10', 10", ...), une unité électronique de commande (16) étant incluse, connectée à chacun desdits premiers onduleurs (10, 10', 10", ...) et conçue pour actionner sélectivement une ou plusieurs desdites premières machines électriques (6, 6', 6", ...) et pour en contrôler la vitesse de rotation.

7. Système selon n'importe laquelle des revendications précédentes, **caractérisé en ce qu'**il comprend au moins un second circuit hydraulique (17) relié fluidiquement audit premier circuit (2) et comprenant des moyens d'échange thermique (18) pour refroidir le fluide de travail.

8. Système selon la revendication 7, **caractérisé en ce que** ledit second circuit hydraulique (17) comprend un réservoir de fluide (19) pour la libération contrôlée d'une quantité prédéterminée du même fluide dans ledit premier circuit hydraulique (2) pendant l'activation des moyens d'actionnement (A) pour remplir complètement les circuits hydrauliques respectifs.

9. Système selon n'importe laquelle des revendications précédentes, **caractérisé en ce qu'**il comprend une seconde machine électrique (20) pouvant être couplée à la tête de forage (H) et conçue pour activer la rotation de celle-ci autour d'un axe sensiblement vertical (V).

10. Système selon la revendication 9, **caractérisé en ce que** ladite seconde machine électrique (20) comprend un second moteur électrique (21) et un second onduleur (22) conçu pour contrôler la vitesse de rotation dudit second moteur (21).

11. Système selon la revendication 10, **caractérisé en ce que** ledit second onduleur (22) comprend des moyens capteurs (24) destinés à détecter une caractéristique électrique ou mécanique dudit second moteur (21) et à fournir une rétroaction sur la vitesse de rotation de celui-ci en fonction de la valeur détecté de ladite caractéristique.

12. Système selon la revendication 11, **caractérisé en ce qu'**il comprend une unité centrale (26) connectée à un ou plusieurs desdits premiers onduleurs (10) et audit second onduleur (22) pour régler l'activation des moyens d'actionnement (A) en fonction de la valeur détectée de ladite caractéristique.
